# EUROPÄISCHE PATENTANMELDUNG

(11) **EP 2 316 272 A1**
(43) Veröffentlichungstag der Anmeldung: **04.05.2011**
(21) Anmeldenummer: 10013730.6
(22) Anmeldetag: 18.10.2010
(51) Int. Cl.: A22C 11/10, A22C 11/12

(54) **Vorrichtung zum axialen Antreiben von Einschnürelementen für schlauchformige Verpackungen**

(30) Priorität: 30.10.2009 DE 202009014670 U
(71) Anmelder: Tipper Tie technopack GmbH, 21509 Glinde (DE)
(72) Erfinder: Lorenzen, Torben, 21509 Glinde (DE); Jens, Thomas, 22927 Großhansdorf (DE)
(74) Vertreter: Glawe, Delfs, Moll

(57) **Zusammenfassung**

Bei einer Vorrichtung zum axialen Antreiben von Einschnürelementen für schlauchförmigen Verpackungen wird ein Pneumatikzylinder mit zwei Druckkammern eingesetzt, wobei die Druckkammern Öffnungen aufweisen, denen jeweils eine schaltbare Sperreinrichtung zugeordnet ist, die in bestimmter Weise angesteuert werden kann. Auf diese Weise kann für beide Druckkammern gleichzeitig ein Sperrzustand eingestellt werden, so dass eine genaue Steuerung der Zylinderstellung möglich ist.

## Beschreibung

Die Erfindung betrifft eine Vorrichtung nach dem Oberbegriff des Patentanspruchs 1.

Solche Vorrichtungen werden vornehmlich beim Verpacken viskosen Füllguts in schlauchförmige Verpackungen eingesetzt, namentlich in Wurstmaschinen. Dabei wird das Wurstbrät von einer Füllmaschine durch ein Füllrohr gestoßen, über das ein leerer, einseitig verschlossener Wurstdarm gestülpt ist. Durch den Druck des nachstoßenden Bräts wird der gefüllte Darm vom Füllrohr abgezogen. Von einer an der Stirnseite des Füllrohrs angeordneten Verschließmaschine werden vom gefüllten Darm einzelne Würste abgeteilt, beispielsweise durch abschnittsweise Anbringung von metallischen Clips. Hierzu weist die Verschließmaschine Einschnürelemente auf, mit denen ein füllgutfreier Abschnitt des Darms gebildet werden kann, um an dieser Stelle den Verschluss zu bilden.

Vielfach ist es erwünscht, die Einschnürelemente zumindest teilweise axial verschieben zu können. Der Begriff "axial" bezieht sich in diesem Zusammenhang auf die Achse des Verpackungsschlauchs. So sind beispielsweise bei sogenannten Doppelclipautomaten die Einschnürelemente zu zwei Gruppen zusammen gefasst, von denen eine axial verschoben werden kann. Während beide Gruppen dicht beieinander stehen, schnürt jede von ihnen Verpackungsschlauch ein. Die verschiebbare Gruppe wird dann axial weggespreizt. Hierdurch wird das Brät seitlich verdrängt, so dass entlang der Schlauchachse ein verlängerter füllgutfreier Zopfabschnitt entsteht. Dieser ist lang genug, damit darauf zwei Clips nebeneinander gesetzt und anschließend ein Messer den Darm zwischen den Clips trennen kann.

Damit ein und dieselbe Maschine verschiedene Produktsorten unter jeweils möglichst optimalen Bedingungen verarbeiten kann, ist es wünschenswert, dass der Spreizabstand der Einschnürelemente einstellbar ist. Für sogenannte "Slack Fill"-Anwendungen ist zudem ein "Überspreizen" erwünscht, d. h. die Einschnürelemente werden zwischen dem Einschüren und vor dem Setzen der Clips noch weiter auseinander gefahren als zum Setzen der Clips und Durchschneiden des Darms nötig. Hierdurch entsteht ein füllgutfreier Bereich innerhalb des beidseitig verschlossenen Schlauchabschnitts, der es ermöglicht, das Produkt in nachfolgenden Arbeitsschritten in gewünschter Weise zu formen.

In allen Fällen diesen muss diese Einstellbarkeit reproduzierbar sein, d. h. die Parameter eines früher hergestellten Produkts müssen so genau wie möglich wieder erreicht werden, nachdem die Maschine zwischenzeitlich zur Produktion anderer Produkte eingerichtet und entsprechend verstellt wurde. Außerdem sollte die Einstellbarkeit regelbar sein, so dass der Spreizabstand in Abhängigkeit von bei der Produktion gemessenen Parametern nachgestellt werden kann. So kann z. B. während des Betriebs automatisch auf Viskositätsschwankungen infolge von Temperaturveränderungen im Brät reagiert werden.

Als Antriebe für die Spreizbewegung der Einschnürelemente sind an sich Pneumatikzylinder aufgrund ihrer Zuverlässigkeit und Einfachheit sehr beliebt, so dass sie in solchen Maschinen sehr häufig eingesetzt werden. Jedoch ließ sich damit die genannte Einstellbarkeit bislang nicht erreichen. Denn durch die Unterbrechung der Druckluftzufuhr zu bestimmten Zeitpunkten lässt sich, wie Versuche der Anmelderin schon vor Jahren ergeben haben, nicht erreichen, dass der Kolben reproduzierbar und mit hinreichender Genauigkeit an bestimmter Stelle stehen bleibt. Soweit bei Pneumatikzylindern eine Einstellbarkeit verwirklicht wurde, geschah dies über einstellbare Anschläge (US 4,980,949, US 5,167,567).

Als Alternative wurden Elektro- und Hydraulikantriebe als gut steuerbar erkannt (s. EP 0 935 421 B1, insb. Abs. [0012]). Sie sind jedoch als Spreizantriebe kostenintensiv und wartungsaufwendig. Lösungen über mechanische Umlenkvorrichtungen (DE 10 2007 011 422 B3) bringen zusätzlich die Nachteile eines großen Platzbedarfs und vieler mechanisch bewegter Komponenten mit sich.

Der Erfindung liegt daher die Aufgabe zugrunde, eine zuverlässige Einstellbarkeit für gattungsgemäße Vorrichtungen mit Pneumatikzylindern als Antrieben zu erreichen. Sie löst dies durch die Merkmale des Patentanspruchs 1. In den Unteransprüchen finden sich vorteilhafte Weiterbildungen der Erfindung.

Die Erfindung fußt auf der Erkenntnis, dass sich eine genaue Einstellbarkeit erreichen lässt, wenn man nicht nur die Druckluftzufuhr, sondern im gleichen Moment den Druckluftabfluss auf der in Bewegungsrichtung des Kolbens liegenden Druckkammer des Zylinders unterbricht. Es bildet sich dann augenblicklich beidseits des Kolbens ein Druckpolster aus, das den Kolben sicher und schnell in Position hält. Damit dies funktioniert, müssen die Unterbrechungen schaltbar sein und von einer Steuereinrichtung gleichzeitig ausgelöst werden.

Einschnürelemente im Sinne der Erfindung sind sämtliche Gegenstände, die bestimmt und geeignet sind, gefüllte schlauchförmige Verpackungen auf kleine Durchmesser zusammen zu drücken. Die Einschnürelemente können zu Gruppen in der Weise zusammengefasst, dass die Elemente einer Gruppe von mindestens zwei Seiten radial auf den Schlauch zugestellt werden und eine Gruppe dann axial von der anderen weg bewegt wird. Es kann sich insbesondere um zwei Gruppen aus je zwei Rafferblättern handeln, die jeweils eine Scherenbewegung aufeinander zu vollführen können.

Als Druckmedium für den Pneumatikzylinder kommt vorzugsweise Druckluft in Betracht, da sie am leichtesten Verfügbar sind. Es sind aber auch andere Gase denkbar.

Eine mechanische Verbindung im Sinne der Erfindung muss zwischen der Anordnung aus Zylinder und Kolben und den zu bewegenden Einschnürelementen bestehen. Mechanisch bedeutet hierbei, dass die Bewegung des Kolbens über mechanische Mittel in eine Bewegung der Einschnürmittel umgesetzt wird. Vorzugsweise sind diese Mittel starr, so dass keine Energie darin gespeichert wird. Es kann sich um ein Gestänge handeln. Weiter vorzugsweise ist der Kolben über eine Kolbenstange starr mit einer Halterung verbunden, die die zu bewegenden Einschürelementen trägt und mit ihnen mitbewegt wird. Die Erfindung schließt es allerdings auch nicht aus, dass der Kolben ortsfest ist und der Zylinder sich mit den Einschnürelementen bewegt.

Sperreinrichtungen im Sinne der Erfindung können alle Gegenstände sein, die den Fluss von Druckmedium in oder aus dem Pneumatikzylinder sicher unterbrechen. Sie können insbesondere durch Absperrventile gebildet sein. Dass die Sperreinrichtungen schaltbar sind, bedeutet, dass sie auf ein äußeres Signal hin in den Sperrzustand übergehen.

Eine Signalübertragungseinrichtung muss dementsprechend imstande sein, ein solches Signal zu übertragen. Die Signalübertragung kann beispielsweise ihrerseits pneumatisch, mechanisch, elektrisch, optisch oder per Funk erfolgen. Hierzu kann die Signalübertragungseinrichtung eine Signalleitung oder auch nur Sende- und Empfangseinheiten umfassen.

Die erfindungsgemäße Steuereinheit kann beliebig ausgeführt sein, solange sie imstande ist, die Signale zum Sperren gleichzeitig über die Signalübertragnungseinrichtungen an jede der Sperreinrichtungen zu geben. Vorzugsweise arbeitet die Steuereinheit elektronisch, und weiter vorzugsweise umfasst sie einen Microcontroller. Vorteilhafterweise bewirkt dieselbe Steuereinheit auch die Entsperrung und die Umkehrung der Bewegungsrichtung des Kolbens.

Der symmetrische Innenraum jeder Druckkammer des Pneumatikzylinders bildet ein Kammervolumen. Idealerweise sind die Sperreinrichtungen derart ausgeführt, dass ihre Sperrorgane im Sperrzustand mit der Zylinderinnenwand abschließen, so dass das Kammervolumen in diesem Zustand nicht noch mit einem weiteren Volumen in Verbindung steht. Praktisch jedoch ist es kaum zu vermeiden, dass an das Kammervolumen auch im Sperrzustand noch ein Zuleitungsvolumen anschließt, da die Sperrorgane aus konstruktiven Gründen normalerweise etwas von der Zylinderinnenwand abgesetzt sein müssen. Vorteilhafterweise sollte dieses Zuleitungsvolumen im Sperrzustand aber minimal sein. Dann sind auch Druckausgleichsprozesse zwischen Kammervolumen und Zuleitungsvolumen nach Erreichen der Sperrstellung minimiert, was zur Stabilisierung des Druckpolsters beiträgt. Vorteilhafterweise sind für beide Druckkammern die Verhältnisse von Zuleitungsvolumen im Sperrzustand zu Kammervolumen nicht größer als 10 %, weiter vorteilafterweise nicht größer als 5 % und noch weiter bevorzugt nicht größer als 1 %.

Vorzugsweise sind die Wandungen der Kammervolumina wie auch der Zuleitungsvolumina im Sperrzustand starr, d. h. unflexibel. Insbesondere umfassen die Zuleitungsvolumina keine flexiblen Pneumatikschläuche. Nach Erreichen des Sperrzustands kann dann kein Druckausgleich über flexible Wandungen z. B. mit der Außenatmosphäre stattfinden. Auch das fördert die Stabilisierung der Druckpolster.

Die vorstehenden Weiterbildungen werden vorzugsweise auf einfache Weise dadurch verwirklicht, dass die Sperreinrichtungen durch starr mit dem Pneumatikzylinder verbundene Ventile mit Sperrfunktion gebildet sind.

Vorzugsweise weichen die Summen aus Kammervolumen und Zuleitungsvolumen im Sperrzustand der beiden Kammern in wenigstens einer, vorzugsweise mehreren von der Steuereinrichtung einstellbaren Kolbenpositionen, um nicht mehr als 50 %, weiter vorzugsweise um nicht mehr als 30 % voneinander ab. D. h. das eine Volumen beträgt nicht mehr als das 1,5- bzw. 1,3-Fache des anderen Volumens. Wenn somit die Volumina in einer vergleichbaren Größenordnung gehalten werden, weichen auch die Kompressibilitäten der Druckpolster auf beiden Seiten des Kolbens nicht zu sehr voneinander ab. Dies trägt zur Stabilisierung der Kolbenposition im Sperrzustand bei. Allerdings wird dann normalerweise nicht der volle Kolbenhub nutzbar sein.

Vorteilhafterweise ist ein Sensor zur Messung der axialen Position der Einschnürelemente vorgesehen. Dessen Signal ist über eine Signalübertragungseinrichtung der Steuereinheit zugeführt. Dabei ist die Steuereinheit eingerichtet, die Sperreinrichtungen in Abhängigkeit von diesem Signal in ihren jeweiligen Sperrzustand zu versetzen. Hierdurch kann auf sehr einfache und zugleich zuverlässige Weise eine gewünschte Position der Einschnürelemente angefahren werden. Alternativ, aber weniger zuverlässig ist dies durch Erfassung der Verfahrzeit oder der Menge an zugeführtem Druckmedium möglich.

Dabei muss der Sensor die Position der Einschnürelemente nicht unmittelbar an diesen selbst erfassen. Dieser Weiterbildungsaspekt schließt es auch ein, dass die Position mittelbar z. B. optisch über Ablesemarken an der Kolbenstange oder elektromagnetisch über die Position des Kolbens erfasst wird, also die Kolbenposition gemessen und anhand dessen die Position der Einschnürelemente bestimmt. Es ist sogar vorteilhaft, wenn der Sensor an der Außenwand des Zylinders angeordnet und eingerichtet ist, die axiale Position des Kolbens zu bestimmen. Dies ermöglicht eine kompakte Bauweise und, da sich die Sperreinrichtungen ebenfalls nahe am Zylinder befinden, kurze und damit weniger störungsanfällige Leitungswege für die Signalübertragungseinrichtungen.

Dabei kann der Sensor bevorzugt ein Magnetfeldsensor sein. Hierzu befindet sich am Kolben oder ggf. auch an der Kolbenstange eine Magnetfeldquelle, etwa in Form einer ferromagnetischen Materialkomponente. In diesem Fall wird die Messung nicht durch eine metallische Zylinderwand beeinflusst. Alternativ ist es aber auch vorteilhaft, den Sensor als induktiven Sensor auszuführen, so dass eine Magnetfeldquelle nicht erforderlich ist. Es genügt dann, wenn Kolben und/oder Kolbenstange zumindest teilweise aus Metall bestehen.

Vorteilhafterweise weit die Steuereinheit eine Speichereinheit für wenigstens eine axiale Position der Einschürelemente auf. In diesem Fall ist es weiter vorteilhaft, wenn die Steuereinheit mit einer Eingabe- und einer Anzeigeeinrichtung verbunden ist, über die Daten in der Speichereinheit abgelegt werden können. Die Eingabe kann dabei weiter bevorzugt darin bestehen, dass auf Druck einer bestimmten Taste die momentane Position gemessen und in der Speichereinheit abgelegt wird. Weiter vorzugsweise ist es auch möglich, Daten aus der Speichereinheit gezielt abzurufen und anzuzeigen und/oder zu ändern.

Denkbar ist auch, dass die Steuereinheit 12 über weitere Signalübertragungseinrichtungen andere Parameter einliest und in Abhängigkeit hiervon die Sperrsignale modifiziert. Solche Parameter kann z. B. die Temperatur des Bräts sein oder die Länge, Breite und/oder das Gewicht der gerade produzierten Wurst.

Die Erfindung schließt es nicht aus, mehrere Komponenten zu ihrer Verwirklichung zu verwenden. So können mehrere Pneumatikzylinder für denselben Antrieb parallel oder in Serie betrieben werden. Ein Zylinder kann auch mehrere Öffnungen für dieselbe Druckkammer aufweisen und/oder mehrere Sperreinrichtungen an einer Öffnung. Es können auch mehrere baugleiche oder verschiedene Sensoren eingesetzt werden, um die Position der Einschnürelemente bzw. des Kolbens zu messen, etwa um die Genauigkeit zu erhöhen oder ein längeres Messfeld zu ermöglichen.

Nachfolgend wird ein Ausführungsbeispiel der Erfindung anhand von Zeichnungen erläutert. Dabei zeigen:

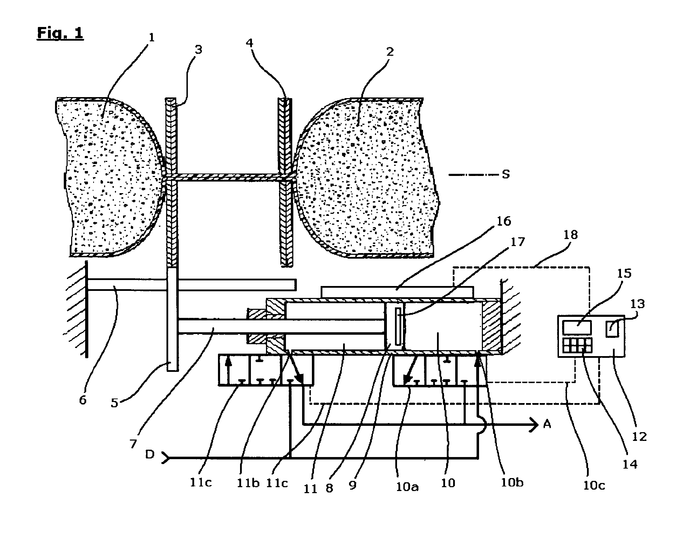

Fig. 1: eine schematische Seitenansicht einer erfindungsgemäßen Vorrichtung während der Spreizbewegung bei der Wurstherstellung;
Fig. 2: dieselbe Ansicht derselben Vorrichtung im Sperrzustand.

Die Enden 1, 2 zweier abzuteilender Würste sind durch je ein Paar 3, 4 von Rafferblechen eingeschnürt. Ein Rafferpaar 3 ist über eine Halterung 5 auf einer Führungsstange 6 parallel zur strichpunktiert eingezeichneten Schlauchachse S längsverschiebbar gelagert, so dass die Rafferpaare 3, 4 auseinandergespreizt werden können und sich zwischen den Wurstenden 1, 2 ein füllgutfreier Darmabschnitt bildet.

Die Halterung 5 ist direkt und starr mit dem einen Ende einer parallel zur Schlauchachse S gelagerten Kolbenstange 7 verbunden. Mit dem anderen Ende der Kolbenstange 7 ist ebenfalls direkt und starr ein Kolben 8 verbunden, der seinerseits längsverschiebbar in einem Pneumatikzylinder 9 gelagert ist. Eine Axialbewegung des Kolbens 8 führt also unmittelbar zu einer Bewegung des beweglichen Rafferpaars 3 im gleichen Ausmaß.

Der Kolben 8 unterteilt den Innenraum des Zylinders 9 in zwei Druckkammern 10 und 11. Die Spreizdruckkammer 10 ist kolbenstangenfern und die Rückholdruckkammer 11 ist auf der Seite der Kobenstange 7 angeordnet. Eine Vergrößerung des Volumens der Spreizdruckkammer 10 geht mit einer Spreizbewegung der Rafferpaare 3, 4 einher, während eine Vergrößerung des Volumens der Rückholdruckkammer 11 bewirkt, dass die Rafferpaare 3, 4 wieder zusammenfahren.

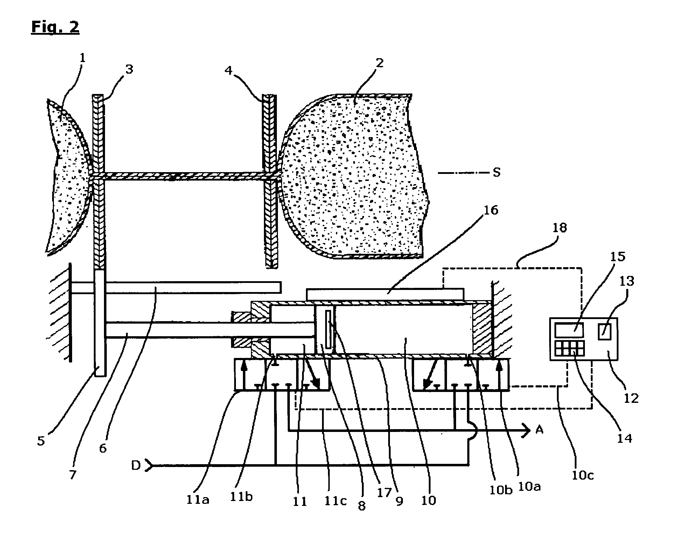

Auf der Außenwand des Zylinders 9 befinden sich zwei 3/3-Wegeventile mit Sperr-Mittelstellung, die hier aus Klarheitsgründen durch ihre Schaltsymbole dargestellt und mit einer Druckluftzufuhr D und einem Abluftausgang A verbunden sind. Das Spreizventil 10a befindet ist über eine Öffnung 10b in der Wand des Zylinders 9 mit der Spreizkammer 10 verbunden. In entsprechender Weise ist das Rückholventil 11a über eine Öffnung 11b mit der Rückholdruckkammer 11 verbunden. Beide Ventile 10a, 11a sind so an den Öffnungen 10b, 11b angeordnet, dasss die Ventilgehäuse mit der Zylinderaußenwand starr verbunden sind und die Wandungen der Leitungen zwischen Ventilen 10a, 11a und Druckkammern 10 und 11 starr sind. Man erkennt, dass das Druckmedium bei Umschaltung in die in Fig. 2 zu sehende Sperrstellung praktisch keine Ausweichmöglichkeiten hat, so dass sich in den Druckkammern 10 und 11 sofort stabile Druckpolster ausbilden.

Eine elektronische Steuereinheit 12 ist mit dem Spreizventil 10a über eine elektrische, gestrichelt eingezeichnete Steuerleitung 10c und mit dem Rückholventil 11a über eine ebenfalls elektrische und gestrichelt dargestellte Steuerleitung 11c verbunden. Hierüber kann die Steuereinheit die Ventile 10a und 11a schalten, insbesondere die in Fig. 2 zu sehende Sperrstellung gleichzeitig an beiden Ventilen 10a und 11a auslösen. Die Steuereinheit 12 verfügt über eine Speichereinheit 13, in der verschiedene axiale Positionen des Kolbens 8 abgelegt sind, so dass die Steuereinheit 12 diese Positionen aus der Speichereinheit 13 abrufen und im geeigneten Moment Sperrsignale an die Ventile 10a, 11a senden kann. Die Steuereinheit 12 ist ferner mit einer Tastatur 14 und einer Anzeige 15 versehen, über die Parameter wie etwa die in der Speichereinheit 13 abzulegenden axialen Kolbenpositionen eingestellt, abgerufen und geändert werden können.

Auf der Außenwand des Pneumatikzylinders 9 befindet sich ein Positionssensor 16, der über ein Magnetfeld die momentane Position des Kolbens 8 misst. Hierfür weist der Kolben 8 eine ferromagnetische Komponente 17 auf. Mit einer elektrischen, gestrichelt eingezeichneten Messsignalleitung 18 wird das Messsignal, das die axiale Position des Kolbens 8 und damit auch die axiale Position des bewegbaren Rafferpaars 3 repräsentiert, an die Steuereinrichtung 12 übertragen.

## Patentansprüche

1. Vorrichtung zum axialen Antreiben von Einschnürelementen (3) für schlauchförmige Verpackungen (1, 2) mit einem Pneumatikzylinder (9), in dem ein Kolben (8) axial verschiebbar gelagert ist, welcher den Zylinderinnenraum in zwei Druckkammern (10, 11) unterteilt, wobei der Pneumatikzylinder (9) für jede der Druckkammern (10, 11) eine Öffnung (10b, 11b) für ein Druckmedium aufweist, und einer mechanischen Verbindung (5, 7) derart, dass eine Relativbewegung des Kolbens (8) zum Zylinder (9) mit einer Bewegung der Einschnürelemente (3) einhergeht, **dadurch gekennzeichnet, dass** den genannten Öffnungen (10b, 11b) je eine schaltbare Sperreinrichtung zugeordnet ist und jede der genannten Sperreinrichtungen über eine Signalübertragungseinrichtung (10c, 11c) mit einer Steuereinheit (12) verbunden ist, wobei die Steuereinheit (12) eingerichtet ist, beide Sperreinrichtungen (10a, 11a) gleichzeitig jeweils in einen Sperrzustand zu versetzen.

2. Vorrichtung nach Patentanspruch 1, **dadurch gekennzeichnet, dass** für beide Druckkammern (10, 11) jeweils die Verhältnisse von Kammervolumen zu Zuleitungsvolumen im jeweiligen Sperrzustand nicht größer als 10 % sind.

3. Vorrichtung nach einem der vorstehenden Patentansprüche, **dadurch gekennzeichnet, dass** für beide Druckkammern (10, 11) die Wandungen von Kammervolumen und Zuleitungsvolumen im jeweiligen Sperrzustand starr sind.

4. Vorrichtung nach einem der vorstehenden Patentansprüche, **dadurch gekennzeichnet, dass** die Sperreinrichtungen durch starr mit dem Pneumatikzylinder (9) verbundene Ventile (10a, 11a) mit Sperrfunktion gebildet sind.

5. Vorrichtung nach einem der vorstehenden Patentansprüche, **dadurch gekennzeichnet, dass** ein Sensor (16) zur Messung der axialen Position der Einschnürelemente (3) vorgesehen ist, dessen Signal über eine Signalübertragungseinrichtung (18) der Steuereinheit (12) zugeführt ist, wobei die Steuereinheit (12) eingerichtet ist, die Sperreinrichtungen in Abhängigkeit von diesem Signal in ihren jeweiligen Sperrzustand zu versetzen.

6. Vorrichtung nach Patentanspruch 5, **dadurch gekennzeichnet, dass** der Sensor (16) an der Außenwand des Zylinders (9) angeordnet und eingerichtet ist, die axiale Position des Kolbens (8) zu bestimmen.

7. Vorrichtung nach Patentanspruch 6, **dadurch gekennzeichnet, dass** der Sensor (16) ein Magnetfeldsensor ist.

8. Vorrichtung nach Patentanspruch 6, **dadurch gekennzeichnet, dass** der Sensor (16) ein induktiver Sensor ist.

9. Vorrichtung nach einem der vorstehenden Patentansprüche, **dadurch gekennzeichnet, dass** die Steuereinheit (12) eine Speichereinheit (13) für wenigstens eine axiale Position der Einschürelemente (3) aufweist.

10. Vorrichtung nach Patentanspruch 9, **dadurch gekennzeichnet, dass** die Steuereinheit (12) mit einer Eingabe- (14) und einer Anzeigeeinrichtung (15) verbunden ist, über die Daten in der Speichereinheit (13) abgelegt werden können.
